Europäisches Patentamt

**European Patent Office** (11) Numéro de publication: **0 011 027**

Office européen des brevets **B1**

(12) **FASCICULE DE BREVET EUROPEEN**

(19)

(45) Date de publication du fascicule du brevet: **15.02.84** (51) Int. Cl.³: **B 01 J 20/34,**
**B 01 D 53/34, C 25 C 3/22**

(21) Numéro de dépôt: **79400794.8**

(22) Date de dépôt: **24.10.79**

(54) Procédé de traitement d'une matière adsorbante se présentant sous forme de particules chargées d'au moins deux composés volatils de stabilités thermiques différentes.

(30) Priorité: **31.10.78 FR 7830940**
**05.02.79 FR 7902941**

(43) Date de publication de la demande:
**14.05.80 Bulletin 80/10**

(45) Mention de la délivrance du brevet:
**15.02.84 Bulletin 84/7**

(84) Etats contractants désignés:
**BE CH DE GB IT NL**

(56) Documents cités:
**CH - A - 381 651**
**FR - A - 748 584**
**FR - A - 2 140 230**

**CHEMICAL ABSTRACTS, vol. 88, no. 8, 20 février 1978, abrégé 52518m page 101, Columbus, Ohio, USA**

(73) Titulaire: **AIR INDUSTRIE**
**5-21 avenue Dubonnet**
**F-92401 Courbevoie (FR)**

(72) Inventeur: **Remillieux, Jean**
**98ter, BI, Avenue de Paris**
**F-78000 Versailles (FR)**
Inventeur: **Rebours, Albert**
**9, rue Debray**
**F-78400 Chatou (FR)**
Inventeur: **Dumortier, Philippe**
**3, rue des Courlis**
**F-78500 Sartrouville (FR)**
Inventeur: **Marchal, Paul**
**12, Avenue de la Bedoyère**
**F-92380 Garches (FR)**

(74) Mandataire: **Picard, Jean-Claude Georges et al,**
**Cabinet Plasseraud 84, rue d'Amsterdam**
**F-75009 Paris (FR)**

Courier Press, Leamington Spa, England.

Procédé de traitement d'une matière adsorbante se présentant sous forme de particules chargées d'au moins deux composés volatils de stabilités thermiques différentes

La présente invention concerne un procédé de régénération d'une matière adsorbante se présentant sous forme de particules chargées d'au moins deux composés volatils de stabilités thermiques différentes.

On sait qu'il est courant d'utiliser des matières adsorbantes pour épurer des fumées chargées de produits nocifs, avant d'évacuer ces fumées à l'atmosphère. C'est ainsi que l'on utilise couramment l'alumine, par exemple, pour épurer les fumées issues des fours de cuisson des anodes destinées aux cuves d'électrolyse, dans l'industrie de l'aluminium, ces fumées contenant notamment des goudrons et des composés fluorés.

Toutefois, le problème se pose de régénérer les particules adsorbantes chargées de goudrons, de composés fluorés, ou d'autres produits nocifs, sans que la régénération libère ces produits, notamment le fluor, dans l'atmosphère, et ceci en éliminant également les poussières de carbone qu'elles peuvent porter.

Certains procédés mettent en oeuvre, à cet effet, des fours rotatifs. Les installations utilisées présentent cependant l'inconvénient d'être encombrantes et chères, et d'un entretien également coûteux. En outre, ces fours peuvent être le siège d'accumulations de matière, entraînant une combustion instable.

D'autres mettent en oeuvre une fluidisation des matières adsorbantes à régénérer par de l'air très chaud. Dans ce cas, des difficultés se présentent du fait de la perte de charge élevée créée par le lit fluidisé, ce qui entraîne une consommation d'énergie de soufflage importante et, en outre, le lit a tendance à être colmaté par les poussières.

Dans les deux cas, les composés fluorés se volatilisent de façon importante, et une épuration complémentaire de l'air est prévue pour le rendre non polluant avant son évacuation à l'atmosphère.

Le but de la présente invention est d'élaborer un nouveau procédé apte à résoudre ce problème de la régénération de particules adsorbantes, notamment d'alumine, sans les inconvénients des procédés connus.

A cette fin, conformément à la présente invention, un procédé de traitement d'une matière adsorbante se présentant sous forme de particules chargées d'au moins deux composés polluants de stabilités thermiques différentes est caractérisé en ce que l'on fait subir auxdites particules de matière adsorbante une calcination, durant leur passage dans une première colonne de contact, dans laquelle elles sont mises en suspension et entraînées par un courant de gaz oxydant dont la température est maintenue entre 450 et 900°C, de manière à obtenir la combustion ou la décomposition thermique de l'un au moins des composés polluants de moindre stabilité thermique, en ce que l'on effectue, à la sortie de cette première colonne de contact, une séparation entre d'une part lesdites particules et d'autre part le gaz d'entraînement et les produits gazeux issus de cette calcination, et en ce qu'un courant de gaz constitué d'au moins une partie des gaz issus de la séparation précitée, ces gaz étant préalablement refroidis à une température inférieure à 200°C, parcourt une seconde colonne de contact où il met en suspension et entraîne des particules de cette même matière adsorbante déjà traitée par calcination, de sorte à réadsorber dans cette seconde colonne les produits gazeux involontairement désorbés dans la première colonne.

Par le terme "calcination", on entend définir une opération de combustion avec décomposition thermique éventuelle.

Ainsi, les gaz issus de la seconde colonne de contact peuvent être évacués à l'atmosphère simplement après un filtrate classique, sans qu'il soit nécessaire de prévoir une installation supplémentaire d'épuration, par exemple pour éliminer le fluor, dans le cas d'application évoqué plus haut où la matière adsorbante est chargée de goudrons et de composés fluorés. Ce fluor est en effet réadsorbé dans ladite seconde colonne, ayant été désorbé dans la première, et ceci sans aucune consommation supplémentaire d'alumine.

Quant au produit calciné dans cette première colonne, on aura compris qu'il s'agit essentiellement des goudrons, toujours dans le cas d'application précité.

L'invention telle que ci-dessus définie sous sa forme la plus générale pourra inclure bien d'autres dispositions annexes.

En particulier, on pourra prévoir qu'une partie, dosable, de ladite matière partiellement épurée obtenue après l'opération de séparation mentionnée est recyclée à l'entrée de ladite première colonne de contact, pour parfaire la calcination.

De même, une opération de séparation intervenant également à la sortie de la seconde colonne de contact, entre les gaz de mise en suspension et la matière adsorbante, on pourra prévoir également que cette matière est au moins partiellement recyclée à l'entrée de ladite seconde colonne, pour parfaire la réadsorption, dans celle-ci, desdits produits gazeux désorbés dans la première colonne.

On pourra prévoir en outre que, d'une façon en soi connue, la mise en suspension de la matière adsorbante est effectuée, tant en amont de la première colonne de contact qu'en amont de la seconde, par apport de la matière en aval du col d'un venturi traversé par le courant gazeux alimentant la colonne considérée.

Pour éviter, dans la partie des gaz issus de l'opération de séparation, la présence de poussières trop fines pour avoir été séparées, par exemple de poussières de carbone, on pourra prévoir que ces gaz sont filtrés avant introduction dans la seconde colonne.

Pour ce qui est des circuits gaz, un procédé conforme à l'invention pourra encore se caractériseren en ce que ledit courant de gaz oxydant qui, dans la première colonne de contact, entraîne et met en suspension la matière adsorbante à traiter, est constitué par de l'air chaud dont la température est régulée automatiquement en fonction de la température mesurée à la sortie de la colonne, cet air pouvant être constitué en partie par de l'air neuf, en partie par recyclage de l'air déjà chaud obtenu à la sortie de ladite première colonne après séparation de la matière adsorbante partiellement épurée, l'air neuf pouvant d'ailleurs être préchauffé, dans un échangeur, par prélèvement de calories sur la partie d'air dirigée vers l'entrée de ladite seconde colonne.

On obtient ainsi une régulation automatique de la température dans la première colonne de contact. D'autre part, on réduit l'apport extérieur nécessaire de calories, par récupération d'une partie de la chaleur des gaz issus de la première colonne, et, dans l'échangeur, on provoque un premier refroidissement de l'air destiné à alimenter la seconde colonne, ce qui est favorable à la réadsorption.

On augmentera d'ailleurs ce refroidissement nécessaire en prévoyant un apport d'air neuf et frais, sous un débit régulé automatiquement à partir d'une mesure de la température à la sortie de cette colonne.

Malgré l'obtention prémentionnée d'une certaine régulation automatique de la température dans la première colonne de contact, par injection d'une certaine quantité d'air neuf et frais à son entrée, il peut apparaître une élévation de la température le long de cette colonne, ce qui risque de conduire, à son extrémité de sortie, à une valeur difficilement compatible avec la tenue des matériaux constitutifs de l'installation. Il peut en résulter, en outre, la désorption d'une quantité plus importante de certains composés, tels que les fluorures, dont le rejet à l'atmosphère est indésirable: cela conduirait à surdimensionner les moyens ultérieurs d'élimination du fluor, ce qui en augmenterait le coût.

Cette élévation de température serait évidemment limitée en adoptant une valeur plus grande pour le flux de courant gazeux entraînant la matière adsorbante, mais le progrès consiste précisément à réduire cette valeur, dans le but de réduire les dimensions et le coût de l'installation.

Il serait également possible d'abaisser encore plus la température des gaz à l'entrée de la colonne de calcination, et par conséquent d'éviter la surchauffe ci-dessus mentionnée. Toutefois, cette disposition abaisserait également la température de la zone de combustion des goudrons, combustion dont l'amorçage risquerait de ne plus se produire, entraînant l'extinction de la réaction.

En outre, on n'éviterait pas de la sorte une variation importante de la température le long de la colonne de calcination, cette variation entraînant une hétérogénéité de la réaction.

D'autre part, l'expérience montre que, selon la nature des goudrons rencontrés, la combustion est plus ou moins rapide. De plus, le calibre des particules de matière adsorbante peut varier sensiblement, ce qui affecte également leur vitesse d'échauffement: il en résulte que la répartition des températures le long de la colonne de calcination peut s'en trouver affectée, la surchauffe se produisant soit en début de parcours, en cas de combustion rapide, soit en fin de parcours, en cas de combustion retardée. Ce phénomène peut être accentué par la présence, en proportion plus ou moins grande, de poussières à base de carbone, provenant soit des fumées que les particules d'alumine avaient servi à épurer, soit plus simplement d'un premier stade de combustion des goudrons.

Par suite, la présente invention a encore pour but d'éviter de tels inconvénients et, en même temps d'améliorer le rendement thermique du procédé et, par conséquent, de réduire la dépense de combustible.

Pour ce faire, on pourra prévoir que l'échauffement des gaz d'entraînement de la matière à régénérer dans la colonne de calcination est éliminé directement, au fur et à mesure qu'il se produit, le long de la colonne de calcination, au moyen d'un courant de gaz auxiliaire circulant à l'intérieur d'une double enveloppe entourant ladite colonne sur au moins une partie de sa longueur. Il est ainsi possible de limiter la température dans cette colonne de manière à obtenir une température régulière le long du parcours du flux de gaz et de matière adsorbante.

Ce courant de gaz auxiliaire peut, là encore, être consitué au moins en partie par de l'air neuf et frais qui est ensuite introduit, après mélange avec les gaz recyclés, à l'entrée de ladite colonne de calcination.

Puisque cet air neuf doit être de toute façon réchauffé pour provoquer et entretenir la réaction de calcination, le réchauffement obtenu du fait de cette circulation dans ladite double enveloppe permet d'économiser le combustible qui, autrement, aurait été nécessaire. Ceci constitue un avantage supplémentaire de ce perfectionnement.

Ce courant de gaz auxiliaire contient une proportion ajustable de gaz chauds recyclés provenant de la colonne de calcination. De cette manière, on évite le choc thermique au contact de ladite première colonne et le risqué concomittant d'extinction de la réaction de calcination sous l'effet d'un refroidissement local excessif.

Le sens général de passage du flux de gaz auxiliaire est choisi en fonction de la nature des produits qui seront traités par l'installation:

—même sens que celui du flux de matière à calciner si ses caractéristiques doivent entraîner la combustion de la majeure partie des composés polluants dès le début de la réaction; de cette façon, le gaz auxiliaire le plus froid est au contact de la zone de plus fort dégagement de chaleur et la zone d'achèvement de la combustion n'est pas exagérément refroidie.

—en sens opposé à celui du flux de matière à calciner, si ses caractéristiques doivent entraîner un développement plus progressif de la réaction; de cette façon, le gaz auxiliaire le plus froid est au contact de la zone de combustion la plus active, et la zone d'amorçage de la réaction n'est pas exagérément refroidie.

Ces dispositions rendent acceptable une variation notable de la température du courant de gaz auxiliaire, et permettent par conséquent d'absorber l'échauffement avec une assez faible débit de gaz, tout en obtenant une excellente régularisation de la température de la colonne de contact. Il en résulte un dimensionnement plus économique de la double enveloppe.

Selon une autre caractéristique essentielle, la quantité d'air neuf introduite dans le mélange qui constitue le flux de gaz auxiliaire de refroidissement est régulée automatiquement et de manière proportionnelle en fonction de la température du courant gazeux sortant de la colonne de contact: puisque le refroidissement est précisément proportionnel à cette quantité d'air neuf, il est ainsi possible, lorsque le sens de circulation du courant de gaz auxiliaire est choisi comme exposé ci-dessus, de stabiliser parfaitement la température de la colonne sur toute sa longueur.

Il est à remarquer également que la quantité de chaleur à absorber par le gaz de refroidissement est proportionnelle à la quantité de polluants à brûler: la quantité d'air neuf est donc également proportionnelle à cette dernière, ce qui est une condition essentielle pour une bonne combustion.

Deux modes d'exécution de l'invention vont maintenant être décrits à titre d'exemples nullement limitatifs, avec référence aux figures du dessin annexé dans lequel:

—la figure 1 représente schématiquement une installation complète pour la mise en oeuvre de l'invention; et

la figure 2 est une représentation schématique partielle d'une installation qui peut être du même type général que la précédente et utilisée aux mêmes fins, mais dans laquelle on n'a représenté que la partie "calcination", incluant la colonne de calcination et les moyens mis en oeuvre pour la régulation de la température dans cette colonne.

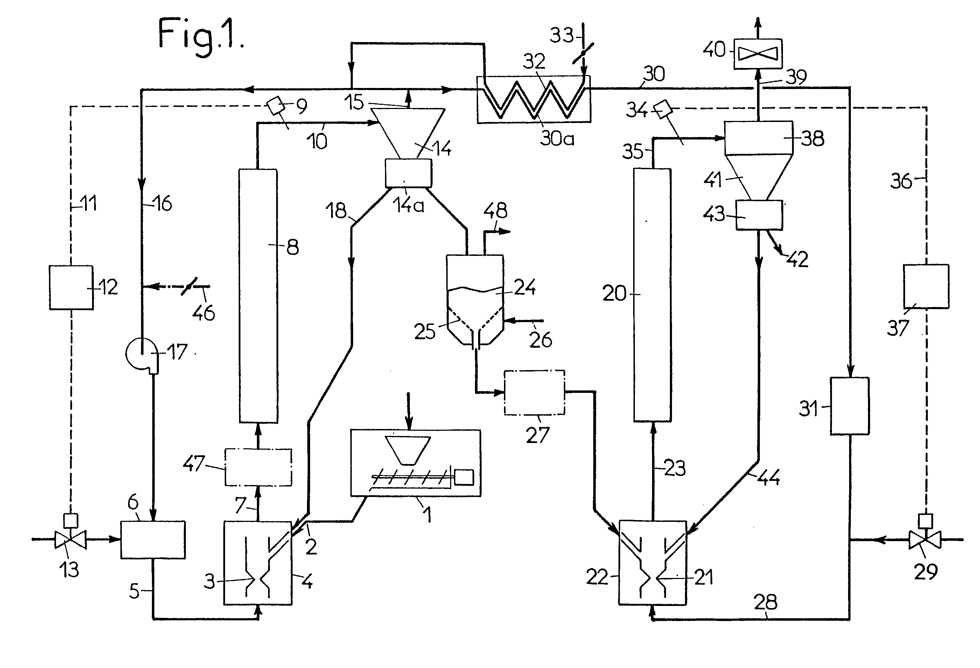

La figure 1 représente une installation que l'on supposera utilisée pour régénérer de l'alumine ayant fixé par adsorption des goudrons et des composés fluorés. Il peut s'agir notamment d'alumine ayant servi à épurer les fumées des fours de cuisson d'anodes pour cuves d'électrolyse, pour la production d'aluminium. On conçoit que le but d'une telle installation est alors de débarrasser les particules d'alumine des goudrons qu'elles ont adsorbés, sans pour autant permettre l'échappement de fluor à l'atmosphère.

L'alumine à traiter alimente une trémie à vis distributrice 1, qui amène la matière, par un conduit 2, en aval du col 3 d'un venturi 4 de mise en suspension, laquelle est effectuée par amenée d'air chaud au venturi par une conduite 5. L'air chaud est produit par un réchauffeur à gaz 6. La matière mise en suspension est dirigée par une conduite 7 à l'entrée d'une première colonne de contact 8. On maintient dans cette colonne une température suffisamment élevée pour provoquer une calcination aussi complète que possible des goudrons. Cette température peut être de l'ordre de 450 à 900°C, les goudrons calcinant à partir de 450°C environ. A cette fin, la température à la sortie de la colonne 8 est régulée. On dispose pour cela d'un détecteur de température 9 sur la conduite de sortie 10 de la colonne, et dont le signal, par l'intermédiaire d'une liaison 11 et d'un régulateur 12, peut commander l'ouverture d'une vanne 13 d'admission du gaz combustible au réchauffeur à gaz 6.

Le mélange issu de la colonne et constitué de particules d'alumine débarrassées des goudrons, de gaz de combustion, de fluor partiellement désorbé des particules et d'air, est amené par la conduite 10 à un dispositif séparateur tel qu'un cyclone 14. La partie gazeuse en sort par une conduite 15 et la partie solide par l'intermédiaire d'un écluseur répartiteur 14a. Une certaine proportion de cette partie gazeuse, issue par la conduite 15, peut retourner à l'entrée de la colonne de contact 8 par l'intermédiaire d'une conduite 16, d'un dispositif d'aspiration 17, du réchauffeur à gaz 6, de la conduite 5 et du venturi 4. On récupère ainsi une partie des calories de ladite partie gazeuse, et on diminue le risque qu'elle contienne des imbrûlés.

De même et pour les mêmes raisons, on peut recycler, par une conduite 18 vers le venturi 4 (en aval de son col 3), une partie dosable de la matière pulvérulente, partiellement épurée, recueillie à la sortie du cyclone 4, ce qui permet de parfaire la calcination des goudrons.

L'autre partie de cette matière est acheminée vers l'entrée d'une seconde colonne de contact 20 destinée à provoquer la réadsorption, sur l'alumine, du fluor désorbé dans la première colonne du fait de la présence dans celle-ci d'une température élevée. Pour obtenir d'excellents échanges thermiques et un excellent contact entre la partie gazeuse et la matière pulvérulente, on pourra, là aussi, mettre la matière en suspension en l'amenant en aval du col 21 d'un venturi 22, en liaison avec ladite colonne 20 par une conduite 23.

Le cheminement de la matière pulvérulente entre l'écluseur répartiteur 18 et le venturi 22 peut être direct, mais il peut aussi comprendre une trémie d'oxydation 24 à fond poreux 25, dans laquelle la matière peut subir une combustion complémentaire destinée notamment à éliminer le carbone qui peut rester accroché sur les particules. A cet effet, on introduit de l'air ou de l'oxygène, par une conduite 26, sous le fond poreux 25.

Ledit cheminement peut comprendre également un dispositif de refroidissement 27, représenté en traits mixtes sur la figure et destiné à abaisser la température des particules.

Pour provoquer dans la seconde colonne de contact 20 une réadsorption efficace du fluor sur les particules d'alumine, en effet, il convient que la température dans cette colonne soit considérablement plus basse que celle qui règne dans la première colonne de contact 8. De préférence, cette température dans la seconde colonne de contact sera inférieure à 200°C.

Pour la mise en suspension des particules d'alumine dans le venturi 22, on peut utiliser comme gaz une partie des gaz s'échappant du dispositif séparateur 14 par la conduite 15 (la partie des gaz qui n'est pas recyclée par la conduite 16 vers l'entrée du venturi 4), la partie restante étant constituée par de l'air frais amené au venturi 22 par une conduite d'entrée 28 pourvue d'une vanne de réglage du débit 29.

Quant à la partie de gaz reprise à partir du dispositif séparateur 14, on a référencé en 30 la conduite qui l'amène vers l'entrée du venturi 22. Etant donné que les particules à la sortie du dispositif séparateur 14 peuvent porter de fines poussières de carbone et d'alumine (poussières inférieures à 15 microns), il pourra être opportun, afin de ne pas retrouver ces poussières à la sortie de l'installation, de prévoir sur ladite conduite 30 un dispositif de filtrage 31. Il pourra s'agir de filtres classiques à parois filtrantes en tissu.

La conduite 30 peut par ailleurs, en aval de son raccordement à la conduite 15 d'échappement des gaz du dispositif séparateur 14, être reliée à un élément d'échange 30a d'un échangeur de chaleur dont l'autre élément d'échange, référencé en 32 sur la figure, peut relier la conduite de retour 16 ci-dessus mentionnée à une source d'air neuf à débit réglable 33. De la sorte, d'une part les gaz chauds issus de la conduite 15 sont-ils refroidis avant d'être introduits par l'intermédiaire du venturi 22 dans la seconde colonne de contact 20, et d'autre part l'air neuf de la source 33 est-il réchauffé avant d'être envoyé, par le dispositif d'aspiration 17, dans la première colonne de contact 8, par l'intermédiaire du venturi 4. On récupère ainsi utilement les calories contenues dan les gaz issus du dispositif séparateur 14.

De même que pour la colonne de contact 8, on pourra réguler la température dans la seconde colonne 20, grâce à un détecteur de température 34 prévu sur sa conduite de sortie 35, et commandant, par l'intermédiaire d'une liaison 36 et d'un régulateur 37, l'ouverture de la vanne d'admission d'air neuf 29. La température dans la conduite de sortie 35 peut par exemple être fixée à 120°C.

Enfin, la matière pulvérulente refroidie et sur laquelle le fluor aura été réadsorbé dans la colonne de contact 20 pourra être filtrée dans un filtre également classique 38, la partie gazeuse s'en échappant par une conduite 39 avant d'être évacuée à l'atmosphère par un ventilateur 40, tandis que la partie solide est récupérée au fond d'une trémie 41 du filtre.

L'alumine débarrassée du goudron mais ayant entièrement réadsorbé le fluor désorbé dans la première colonne de contact 8 pourra être évacuée par une conduite de sortie 42, par l'intermédiaire d'un écluseur répartiteur 43, mais à partir de celui-ci une partie de cette matière pourra également être recyclée vers le venturi 22 par l'intermédiaire d'une conduite 44. Cette disposition permet de parfaire la réadsorption du fluor sur l'alumine et le dosage de la partie recyclée pourra être effectué automatiquement, par exemple en fonction d'une mesure de la teneur en fluor des gaz dans la conduite d'évacuation 39.

Quant à la partie d'alumine non recyclée issue par la conduite de sortie 42, égale à la quantité d'alumine amenée à l'installation par la trémie 1, elle pourra être réutilisée pour l'épuration des fumées s'échappant du four de cuisson des anodes, selon un procédé connu.

Une autre partie de cette alumine pourra également être utilisée pour alimenter les cuves d'électrolyse destinées à la production de l'aluminium.

Sur la figure, on a représenté en traits mixtes, en 46, une autre entrée d'air neuf dans l'installation, en amont du dispositif d'aspiration 17, utilisable concurremment à l'entrée d'air neuf 33 ou en ses lieu et place.

De même, on a représenté part des traits mixtes 47 un dispositif pouvant être interposé à titre facultatif entre le venturi 4 et l'entrée de la première colonne de contact 8. Il peut s'agir notamment d'une chambre pourvue de brûleurs, notamment à gaz, et dans laquelle est formée une nappe de flammes que la matière pulvérulente en suspension devra traverser avant d'être introduite dans la colonne. Il s'agit là d'une disposition qui peut avoir son utilité au cas où il y aurait un risque que certaines compositions de goudrons ne soient pas entièrement calcinées à la sortie de la colonne.

On peut noter par ailleurs que le dispositif séparateur 14 peut être constitué d'un seul cyclone mais pourra comporter également et de préférence plusieurs petits cyclones en parallèle, ceux-ci ayant un meilleur rendement de séparation. On pourra diminuer ainsi dans la conduite 15 la proportion des très fines particules et retarder le colmatage du dispositif de filtrage 31.

On peut noter enfin que la trémie d'oxydation 24 est soumise à une légère dépression pour que le fonctionnement du ou des cyclones du dispositif séparateur 14 ne soit pas perturbé. Cette mise en dépression a été schématisée sur le dessin par une conduite 48 reliée à une source de dépression quelconque, par exemple à l'entrée du dispositif d'aspiration 17.

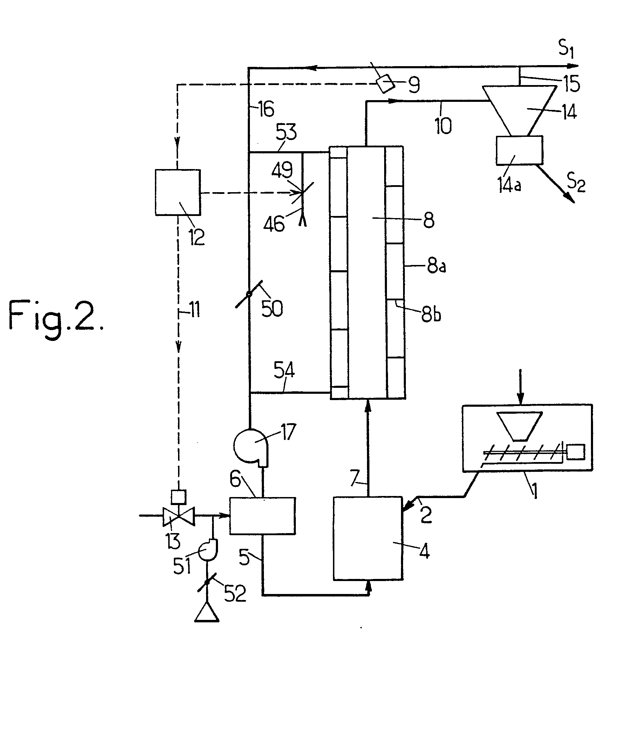

Dans la figure 2, les références qui se retrouvent dans la figure 1 désignent les mêmes organes.

L'air chaud est, ici également, produit par un réchauffeur à gaz 6 dont la conduite d'admission du gaz combustible porte de même une vanne de réglage de débit 13, et la conduite d'amenée d'air comburant une soufflante 51 et un registre de réglage de débit 52. La matière mise en suspension est dirigée par la conduite 7 à l'entrée de la colonne de contact 8 qui, ici, est entourée d'une double enveloppe 8a. L'espace ménagé ainsi autour de la colonne 8 peut être conformé en hélice grâce à une paroi intermédiaire hélicoïdale 8b.

Le mélange issu de la colonne 8 et constitué de particules d'alumine débarrassées des goudrons, de gaz de combustion, de fluor partiellement désorbé des particules et d'air, est, là également, amené par la conduite 10 au dispositif séparateur 14. La partie gazeuse en sort en $S_1$ par l'intermédiaire de la conduite 15, et la partie solide en $S_2$ par l'intermédiaire de l'écluseur répartiteur 14a.

Il va de soi que cette partie solide issue en $S_2$ peut encore subir un traitement ultérieur, par exemple de refroidissement, avec mise en oeuvre, éventuellement, du courant gazeux issu en $S_1$.

Une certaine proportion de la partie gazeuse issue par la conduite 15 peut retourner à l'entrée de la colonne de contact 8 par l'intermédiaire de la conduite 16, du dispositif d'aspiration 17, du réchauffeur à gaz 6, de la conduite 5 et du dispositif de mise en suspension 4.

En by-pass sur ce circuit, de part et d'autre d'un registre 50 prévu sur la conduite 16, sont branchées deux conduites, 53 et 54, reliées respectivement à l'extrémité supérieure et à l'extrémité inférieure de l'espace hélicoïdal ménagé autour de la colonne 8, ceci, comme expliqué plus haut, d'une part pour refroidir la colonne 8, d'autre part pour récupérer les calories ainsi entraînées à l'entrée de la colonne, et diminuer la consommation de gaz combustible. Un apport d'air frais est prévu en 46, par une conduite reliée à la conduite 53 et portant un registre de réglage de débit 49.

La température à la sortie de la colonne 8 est régulée à une valeur de consigne. On dispose pour cela du détecteur de température 9 sur la conduite de sortie 16; son signal, par l'intermédiaire du régulateur à action proportionnelle 12, peut commander en cascade, et successivement, la vanne d'admission 13 de gaz combustible au réchauffeur à gaz 6, et le registre 49 de réglage de l'admission d'air neuf et frais 46.

Il convient de noter que la quantité d'air neuf admise par ce registre est toujours supérieure à la quantité stoechiométrique résultant de la quantité de polluants à calciner.

Si, par exemple, la température détectée vient à augmenter, le régulateur 12 commande tout d'abord la réduction de l'admission de gaz combustible au réchauffeur 6, puis, progressivement, l'ouverture de registre 49 de manière à admettre une quantité d'air neuf et frais plus importante.

Le registre de by-pass 50 permet d'ajuster au départ la proportion des gaz issus de la colonne 8 recyclée par l'intermédiaire du réchauffeur sans avoir préalablement circulé dans l'espace de la double enveloppe 8a.

Dans une variante, le régulateur 12 pourrait commander seulement le registre 49 de réglage de l'admission d'air neuf 46, selon le processus qui vient d'être décrit. La régulation de l'admission de gaz combustible au réchauffeur 6 serait alors réalisée à l'aide d'un second régulateur placé sous l'autorité d'un détecteur de température qui serait disposé sur la conduite d'entrée 5 de la colonne.

### Revendications

1. Procédé de traitement d'une matière adsorbante se présentant sous forme de particules chargées d'au moins deux composés polluants de stabilités thermiques différentes, caractérisé en ce que l'on fait subir auxdites particules de matière adsorbante une calcination, durant leur passage dans une première colonne de contact, dans laquelle elles sont mises en suspension et entraînées par un courant de gaz oxydant dont la température est maintenue entre 450 et 900°C, de manière à obtenir la combustion ou la décomposition thermique de l'un au moins des composés polluants de moindre stabilité thermique, en ce que l'on effectue, à la sortie de cette première colonne de contact, une séparation entre d'une part lesdites particules et d'autre part le gaz d'entraînement et les produits gazeux issus de cette calcination, et en ce qu'un courant de gaz constitué d'au moins une partie des gaz issus de la séparation précitée, ces gaz étant préablement refroidis à une température inférieure à 200°C, parcourt une seconde colonne de contact où il met en suspension et entraîne des particules de cette même matière adsorbante déjà traitée par calcination, de sorte à réadsorber dans cette seconde colonne les produits gazeux involontairement désorbés dans la première colonne.

2. Procédé selon la revendication 1, caractérisé en ce qu'une partie, dosable, de ladite matière calcinée obtenue après l'opération de calcination mentionnée est recyclée à l'entrée de ladite première colonne de contact, pour parfaire la calcination.

3. Procédé selon la revendication 1 ou 2, caractérisé en ce que, une opération de séparation intervenant également à la sortie de la seconde colonne de contact entre les gaz de mise en suspension et la matière adsorbante, celle-ci est au moins partiellement recyclée à l'entrée de ladite seconde colonne, pour parfaire la réadsorption, dans celle-ci, desdits produits gazeux désorbés dans la première colonne.

4. Procédé selon l'une quelconque des revendications précédentes, caractérisé en ce que la mise en suspension des particules de matière adsorbante est effectuée, tant en amont de la première colonne de contact qu'en amont de la seconde, par apport de la matière en aval du col d'un venturi traversé par le courant gazeux alimentant la colonne considérée.

5. Procédé selon l'une quelconque des revendications précédentes, caractérisé en ce que la matière adsorbante est de l'alumine et en ce qu'au moins une partie de cette alumine, non recyclée dans la seconde colonne, est utilisée pour l'épuration des fumées du four de cuisson des anodes destinées aux cuves d'électrolyse, dans l'industrie de l'aluminium.

6. Procédé selon l'une quelconque des revendications précédentes, caractérisé en ce que la matière adsorbante est de l'alumine et en ce qu'au moins une partie de cette alumine, non recyclée dans la seconde colonne, est utilisée pour alimenter les cuves d'électrolyse destinées à la production de l'aluminium.

7. Procédé selon l'une quelconque des revendications précédentes, caractérisé en ce que la partie des gaz issus de la première colonne de contact qui, après séparation de la matière adsorbante, est introduite dans la seconde colonne, est filtrée avant cette introduction.

8. Procédé selon l'une quelconque des revendications précédentes, caractérisé en ce que ledit courant de gaz oxydant qui, dans la première colonne de contact, entraîne et met en suspension la matière adsorbante à traiter, est constitué par de l'air chaud dont la température est régulée automatiquement en fonction de la température mesurée à la sortie de la colonne, cet air pouvant être constitué en partie par de l'air neuf, en partie par recyclage de l'air déjà chaud obtenu à la sortie de ladite première colonne après séparation de la matière adsorbante partiellement épurée, l'air neuf pouvant d'ailleurs être préchauffé, dans un échangeur, par prélèvement de calories sur la partie d'air dirigée vers l'entrée de ladite seconde colonne.

9. Procédé selon l'une quelconque des revendications précédentes, caractérisé en ce que l'on effectue à l'entrée de la seconde colonne de contact un apport d'air neuf et frais, sous un débit régulé automatiquement à partir d'une mesure de la température à la sortie de cette colonne.

10. Procédé selon l'une quelconque des revendications précédentes, caractérisé en ce qu'à l'entrée de la première colonne de contact, on fait traverser, à la matière pulvérulente en suspension, une nappe de flammes.

11. Procédé selon l'une quelconque des revendications précédentes, caractérisé en ce que l'on effectue un refroidissement de la matière adsorbante calcinée avant son introduction dans la seconde colonne de contact.

12. Procédé de régénération d'une matière adsorbante se présentant sous forme de particules chargées d'un ou plusieurs composés organiques combustibles, selon lequel on provoque la calcination d'au moins un desdits composés dans une colonne de contact à l'intérieur de laquelle la matière adsorbante à régénérer circule en étant entraînée en suspension dans un courant de gaz oxydant chaud, caractérisé en ce que l'on fait comporter à ladite colonne, pour son refroidissement, une double enveloppe ménageant autour d'elle un espace annulaire à l'intérieur duquel on fait circuler un courant de gaz auxiliaire, ce gaz auxiliaire étant constitué d'un mélange d'air neuf et d'au moins une partie du gaz chaud obtenu à la sortie de ladite colonne de contact, et en ce que, pour constituer le gaz oxydant chaud, lequel est introduit après réchauffage à l'entrée de ladite colonne, on utilise au moins en partie ledit gaz auxiliaire issu de l'espace annulaire.

13. Procédé selon la revendication 12, caractérisé en ce que l'on fait circuler le courant de gaz auxiliaire dans l'espace annulaire selon un parcours hélicoïdal de sens général opposé au sens du courant de gaz chaud circulant à l'intérieur de la colonne.

14. Procédé selon la revendication 12, caractérisé en ce que l'on fait circuler le courant de gaz auxiliaire dans l'espace annulaire selon un parcours hélicoïdal de même sens général que celui du courant de gaz chaud circulant à l'intérieur de la colonne.

15. Procédé selon l'une quelconque des revendications 12 à 14, caractérisé en ce que l'on met en oeuvre une régulation automatique pour réguler la proportion d'air neuf dans le gaz auxiliaire en fonction de la température du courant gazeux sortant de la colonne de contact.

16. Procédé selon la revendication 15, caractérisé en ce que ladite régulation automatique est adaptée à agir préalablement ou successivement par action dite en cascade sur un moyen de réchauffage du courant de gaz oxydant chaud.

17. Procédé selon l'une quelconque des revendications 12 à 15, caractérisé en ce qu'on met en oeuvre un moyen de réchauffage du courant de gaz oxydant chaud, régulé automatiquement en fonction de sa température à l'entrée de la colonne de contact.

**Claims**

1. A process for treating an adsorbent material in the form of particles loaded with at least two polluting compounds of differing thermal stability, characterised in that the said particles of adsorbent material are subjected to a calcination during their passage through a first contact column, in which they are brought into suspension and entrained by a current of oxidizing gas, the temperature of which is held between 450 and 900°C, so as to produce combustion or thermal decomposition of at least one of the polluting compounds of lower thermal stability, in that separation is effected, at the outlet of said first contact column, between (a) the said particles and (b) the entrainment gas and the gaseous products resulting from this calcination, in that a current of gas comprising at least some of the gases from the said separation, said gases being previously cooled to a temperature below 200°C, passes through a second contact. column in which it brings into suspension and entrains particles of said same adsorbent material already treated by calcination, so as to re-adsorb in this second column the gaseous products which have been unintentionally desorbed in the first column.

2. A process according to claim 1, characterised in that a meterable part of the said calcined material obtained after the said calcination operation is recycled to the inlet of the said first contact column in order to complete the calcination.

3. A process according to claim 1 or 2, characterised in that a separation operation also being carried out at the outlet of the second contact column between the suspending gases and the adsorbent material, the latter is at least partially recycled to the inlet of the said second column to complete the re-adsorption therein of the said gaseous products desorbed in the first column.

4. A process according to any one of the preceding claims, characterised in that the particles of adsorbent material are suspended both upstream of the first contact column and upstream of the second by a supply of material downstream of the neck of a venturi through which the current of gas feeding the column in question passes.

5. A process according to any one of the preceding claims, characterised in that the adsorbent material is alumina and in that at least some of this alumina not recycled to the second column is used for purification of the fumes from the firing oven for anodes intended for electrolysis tanks in the aluminium industry.

6. A process according to any one of the preceding claims, characterised in that the adsorbent material is alumina and in that at least some of this alumina not recycled to the second column is used to supply the electrolysis tanks intended for the production of aluminium.

7. A process according to any one of the preceding claims, characterised in that that part of the gases from the first contact column which, after separation of the adsorbent material is introduced into the second column, is filtered before said introduction.

8. A process according to any one of the preceding claims, characterised in that the said current of oxidizing gas which, in the first contact column, entrains and brings into suspension the adsorbent material for treatment, is hot air, the temperature of which is automatically regulated in dependence on the temperature measured at the outlet of the column, said air comprising, if required, partly new air and partly recycling of the already hot air obtained at the outlet of said first column after separation of the partially purified adsorbent material, the new air also, if required, being preheated in an exchanger by drawing heat from the part of the air fed to the inlet to the said second column.

9. A process according to any one of the preceding claims, characterised in that new and fresh air is supplied to the inlet of the second contact column at a rate of flow which is automatically regulated on the basis of measuring the temperature at the outlet of said column.

10. A process according to any one of the preceding claims, characterised in that the suspended pulverulent material is passed through a sheet of flame at the inlet to the first contact column.

11. A process according to any one of the preceding claims, characterised in that the calcined adsorbent material is cooled before being introduced into the second contact column.

12. A process for regenerating an adsorbent material in the form of particles loaded with one or more combustible organic compounds, in which calcination of at least one of said compounds is carried out in a contact column inside which the adsorbent material for regeneration circulates in suspention in a current of hot oxidizing gas, characterised in that for the purpose of cooling the said column it comprises a double jacket which forms around it an annular space inside which an auxiliary current of gas circulates, said auxiliary gas comprising a mixture of new air and at least a part of the hot gas obtained at the outlet of the said contact column, and the said auxiliary gas from the annular space is at least partially used to form the hot oxidizing gas which is introduced after heating to the inlet of said column.

13. A process according to claim 12, characterised in that the auxiliary gas current circulates in the annular space over a helical path in the generally opposite direction to the direction of the current of hot gas circulating inside the column.

14. A process according to claim 12, characterised in that the auxiliary gas current circulates in the annular space over a helical path of generally the same direction as that of the hot gas current circulating inside the column.

15. A process according to any one of claims 12 to 14, characterised in that an automatic regulation is used to regulate the proportion of new air in the auxiliary gas in dependence on the temperature of the current of gas leaving the contact column.

16. A process according to claim 15, characterised in that the said automatic regulation is adapted to act previously or successively by cascade action on a heating means for the hot oxidizing gas current.

17. A process according to any one of claims 12 to 15, characterised in that use is made of a hot oxidizing gas current heating means automatically regulated in dependence on the temperature of said gas at the inlet to the contact column.

**Patentansprüche**

1. Verfahren zur Behandlung eines Adsorptionsmaterials in Form von Teilchen, die mit mindestens zwei verunreinigenden Verbindungen mit unterschiedlichen thermischen Stabilitäten beladen sind, dadurch gekennzeichnet, daß man die Teilchen des Adsorptionsmaterials einer Kalzination während ihres Durchgangs in einer ersten Kontaktkolonne unterwirft, in der sie von einem Strom oxidierenden Gases, dessen Temperatur zwischen 450 und 900°C gehalten wird, in Suspension gehalten und mitgeführt werden, derart, daß man die Verbrennung oder die thermische Zersetzung mindestens der einen der verunreinigenden Verbindungen mit niedrigerer thermischer Stabilität erhält, daß man am Ausgang dieser ersten Kontaktkolonne eine Trennung zwischen einerseits den Teilchen und andererseits dem Mitnahmegas und den aus dieser Kalzination hervorgegangenen gasförmigen Produkten durchführt, und daß ein Gasstrom, der mindestens von einem Teil der aus der genannten Trennung entstandenen Gase gebildet ist, wobei die Gase vorher auf eine Temperatur von weniger als 200°C abgekühlt wurden, eine zweite Kontaktkolonne durchläuft, wo er die Teilchen dieses gleichen bereits durch Kalzination behandelten Adsorptionsmaterials in Suspension bringt und mitführt, so daß in dieser zweiten Kolonne die in der ersten Kolonne unbeabsichtigt desorbierten gasförmigen Produkte readsorbiert werden.

2. Verfahren nach Anspruch 1, dadurch gekennzeichnet, daß ein dosierbarer Teil des nach dem erwähnten Kalzinationsvorgang erhaltenen kalzinierten Materials an den Eingang der ersten Kontaktkolonne zurückgeführt wird, um die Kalzination zu vervollständigen.

3. Verfahren nach Anspruch 1 oder 2, dadurch gekennzeichnet, daß bei einem ebenfalls am Ausgang der zweiten Kontaktkolonne geschehenden Trennvorgang zwischen den Gasen zur Herstellung der Suspension und dem Adsorptionsmaterial dieses mindestens teilweise zu dem Eingang in die zweite Kolonne zurückgeführt wird, um in dieser die Readsorption der in der ersten Kolonne desorbierten gasförmigen Produkte zu vervollständigen.

4. Verfahren nach einem der vorhergehenden Ansprüche, dadurch gekennzeichnet, daß die Herstellung der Suspension der Teilchen des Adsorptionsmaterials, sowohl oberhalb der ersten als auch oberhalb der zweiten Kontaktkolonne, durch Zuführen des Materials stromab des Halses einer Venturi-Düse bewirkt wird, die von dem die entsprechende Kolonne versorgenden Gasstrom durchquert wird.

5. Verfahren nach einem der vorhergehenden Ansprüche, dadurch gekennzeichnet, daß das Absorptionsmaterial Aluminium ist und daß mindestens ein nicht in die zweite Kolonne zurückgeführter Teil dieses Aluminiums für die Reinigung des Rauches von Brennöfen für Anoden für Elektrolysen-Wannen in der Aluminiumindustrie verwendet wird.

6. Verfahren nach einem der vorhergehenden Ansprüche, dadurch gekennzeichnet, daß das Adsorptionsmaterial Aluminium ist und daß mindestens ein nicht in die zweite Kolonne zurückgeführter Teil dieses Aluminiums zur Versorgung der zur Herstellung von Aluminium bestimmten Elektrolyse-Wannen verwendet wird.

7. Verfahren nach einem der vorhergehenden Ansprüche, dadurch gekennzeichnet, daß der Teil der aus der ersten Kontaktkolonne ausgetretenen Gase, der nach Trennung des Adsorptionsmaterials in die zweite Kolonne eingeführt wird, vor diesem Einführen gefiltert wird.

8. Verfahren nach einem der vorhergehenden Ansprüche, dadurch gekennzeichnet, daß der oxidierende Gasstrom, der in der ersten Kontaktkolonne das zu behandelnde Adsorptionsmaterial mitführt und in Suspension hält, von warmer Luft gebildet wird, deren Temperatur automatisch als Funktion der am Ausgang der Kolonne gemessenen Temperatur geregelt wird, wobei diese Luft teilweise von neuer Luft und teilweise durch Zurückführung von bereits heißer Luft gebildet werden kann, die man am Ausgang der ersten Kolonne nach Trennung des teilweise gereinigten Adsorptionsmaterials erhält, und wobei die neue Luft überdies in einem Wärmetauscher durch Entnahme von Kalorien aus dem Teil der Luft vorgeheizt werden kann, der in Richtung auf den Einlaß der zweiten Kolonne gerichtet wird.

9. Verfahren nach einem der vorhergehenden Ansprüche, dadurch gekennzeichnet, daß man am Eingang in die zweite Kontaktkolonne eine Zufuhr von neuer und frischer Luft mit einer, ausgehend von einer Temperaturmessung am Ausgang dieser Kolonne, automatisch regulierten Durchsatzmenge vornimmt.

10. Verfahren nach einem der vorhergehenden Ansprüche, dadurch gekennzeichnet, daß man am Eingang der ersten Kontaktkolonne das feinpulvrige Material in Suspension einen Flammenteppich durchqueren läßt.

11. Verfahren nach einem der vorhergehenden Ansprüche, dadurch gekennzeichnet, daß man eine Kühlung des kalzinierten Adsorptionsmaterials vor dessen Einführung in die zweite Kontaktkolonne durchführt.

12. Verfahren zum Regenerieren eines Adsorptionsmaterials in Form von Teilchen, die mit einer oder mehreren organischen verbrennbaren Verbindungen beladen sind, bei dem man die Kalzination mindestens einer der Verbindungen in einer Kontaktkolonne hervorruft, in deren Innerem das zu regenerierende Adsorptionsmaterial zirkuliert, indem es in Suspension in einem Strom von heißem oxidierendem Gas mitgenommen wird, dadurch gekennzeichnet, daß man die Kolonne zu ihrer Abkühlung eine doppelte Hülle aufweisen läßt, die um sich einen ringförmigen Raum ausspart, in dessen Innerem man einen Strom von Hilfsgas zirkulieren läßt, wobei das Hilfsgas von einer Mischung neuer Luft und mindestens eines Teils des warmen Gases gebildet wird, das man am Ausgang der Kontaktkolonne erhält, und daß man zur Bildung des heißen oxidierenden Gases, das nach Aufwärmung in den Eingang der Kolonne eingeführt wird, mindestens teilweise das aus dem ringförmigen Raum austretende Hilfsgas verwendet.

13. Verfahren nach Anspruch 12, dadurch gekennzeichnet, daß man den Strom von Hilfsgas in dem ringförmigen Raum längs eines schraubenförmigen Weges in mit der Richtung des warmen, im Inneren der Kolonne zirkulierenden Gasstromes entgegengesetzter Allgemeinrichtung zirkulieren läßt.

14. Verfahren nach Anspruch 12, dadurch gekennzeichnet, daß man den Strom von Hilfsgas in dem ringförmigen Raum längs eines schraubenförmigen Weges in gleicher Allgemeinrichtung zirkulieren laßt, wie die Richtung des im Inneren der Kolonne zurkulierenden warmen Gases.

15. Verfahren nach einem der Ansprüche 12 bis 14, dadurch gekennzeichnet, daß man eine automatische regulierung in Gang setzt, um den Anteil von neuer Luft in dem Hilfsgas als Funktion der Temperatur des aus der Kontaktkolonne austretenden Gasstromes zu regulieren.

16. Verfahren nach Anspruch 15, dadurch gekennzeichnet, daß die automatische Regulierung eingerichtet ist, um vorher oder nach und nach durch sog. Kaskadenwirkung auf ein Mittel zum Aufheizen des warmen oxidierenden Gasstromes einzuwirken.

17. Verfharen nach einem der Ansprüche 12 bis 15, dadurch gekennzeichnet, daß man ein Mittel zum Aufheizen des Stromes warmen oxidierenden Gases schafft, das automatisch als Funktion seiner Temperatur am Eingang der Kontaktkolonne reguliert wird.

Fig.1.

Fig.2.